# EUROPEAN PATENT APPLICATION

(11) **EP 2 151 698 A1**
(43) Date of publication of application: **10.02.2010**
(21) Application number: 08013544.5
(22) Date of filing: 28.07.2008
(51) Int. Cl.: G01S 7/292, G01S 7/40, G01S 13/88, G01S 13/10, G01F 23/284

(54) **Signal processing of signals in pulse-echo measuring systems**

(71) Applicant: Siemens Milltronics Process Instruments Inc., ON K9J 7B1 Peterborough (CA)
(72) Inventor: Duivenvoorden, Jos, Trent River K0L 2ZO Ontario (CA); Larocque, Jean-René, Dr., Peterborough K9J 8E1 Ontario (CA); Lyon, George Quinton, Peterborough K9K 1T9 Ontario (CA)
(74) Representative: Maier, Daniel Oliver

(57) **Abstract**

The invention relates to error correction in a pulse echo measurement system in which a transmitter (1) transmits pulses into a vessel (2) to produce an echo profile (3) which is then processed by signal processing means (4). The signal processing means (4) derives error corrections, particularly for near-range signals containing errors caused by obstructions, by comparing the echo shape with an expected shape. Calibration is not necessary. The comparison is carried out by examining characteristics such as pulse width, pulse symmetry, skew and kurtosis.

## Description

This invention relates to the processing of signals in pulse-echo measurement systems. The invention is particularly applicable to radar-type level measurement systems for industrial process control, but can also be applied to other pulse-echo systems such as ultrasonic systems.

Echoes processed in such a system are often distorted. The distortion has many sources, for example temperature dependency of the components, the presence of an obstacle near the level being detected, multipath echoes within the vessel, or the ring down signal interfering with high level echoes. When the echo is distorted in a shape which is significantly different from the calibrated signal, there can be a large error on the reported level.

In the past, this problem has often been left unaddressed, since the required level of accuracy was typically not high, and the distortion remained within the specified accuracy. However, there is a requirement among users for significantly improved levels of accuracy, and accordingly equipment specifications have been tightened. This raises a particular problem with high level targets (very near range) where the echo from the material under measurement interferes with the echo of the electronics ring-down, resulting in large near-range errors in level.

One previous attempt to address this problem has been to investigate the errors experimentally. It has been found that the errors are typically all "under read" errors, due to the fact that the leading edge of the echo is pushed up by the interference with the ring-down signal. This creates a characteristic error curve in the range 0 - 3m which can be modelled as a straight line correction, and is typically calibrated at 1m.

However, this prior solution has disadvantages. It requires each unit to be calibrated, and is specific to a particular range of measurement.

Accordingly, one object of the present invention is to provide a pulse-echo measurement method and apparatus which can be used at any range, and without requiring calibration.

The present invention provides a method of processing echo profiles in a pulse-echo measurement system, the method comprising identifying individual echo pulses in the echo profile; assessing the shape of each pulse by determining the deviation of the shape from an expected shape; and deriving an error correction factor from the assessment of the shape alone, without other calibration.

Such a method obviates the need to calibrate each individual apparatus, and to do so for various ranges.

The expected shape may be derived by averaging a number of actual measurements under optimal conditions. Such optimal conditions are available at the time of manufacturing, and can also be available at the time of commissioning of the device. An advantage of this is that the averaged measurements from one apparatus may be used to define the expected shape in other apparatus of the same design.

Preferably, the deviation of the pulse shape from an expected shape is determined by evaluating two or more of the following:
pulse width
actual signal strength
pulse symmetry
depth of the nulls on each side of the main lobe
level of the first side lobes
skewness
kurtosis.

The invention will typically be implemented in software, and the invention provides a computer program and computer program product for this purpose.

The invention, from another aspect, provides a pulse-echo measurement system comprising a transmitter for transmitting pulses of energy, a transducer for receiving reflected pulses and forming an echo profile, and signal processing means; in which the signal processing means is operable to identify individual echo pulses in the echo profile; assess the shape of each pulse by determining the deviation of the shape from an expected shape; and derive an error correction factor from the assessment of the shape alone, without other calibration.

The system is typically a radar-based system used for level measurement.

An embodiment of the present invention will now be described, by way of example only, with reference to the drawings, in which:
- FIG 1: is a schematic block diagram of a pulse-echo measurement system;
- FIG 2: shows a typical echo profile in a near range situation;
- FIG 3: shows a similar profile in which the true echo and a false return have partially merged;
- FIG 4: and
- FIG 5: show further merged echoes;
- FIG 6: shows an idealized parabolic echo; and
- FIG 7: and
- FIG 8: show a similar echo in which false echoes are contained without separate peaks being apparent.

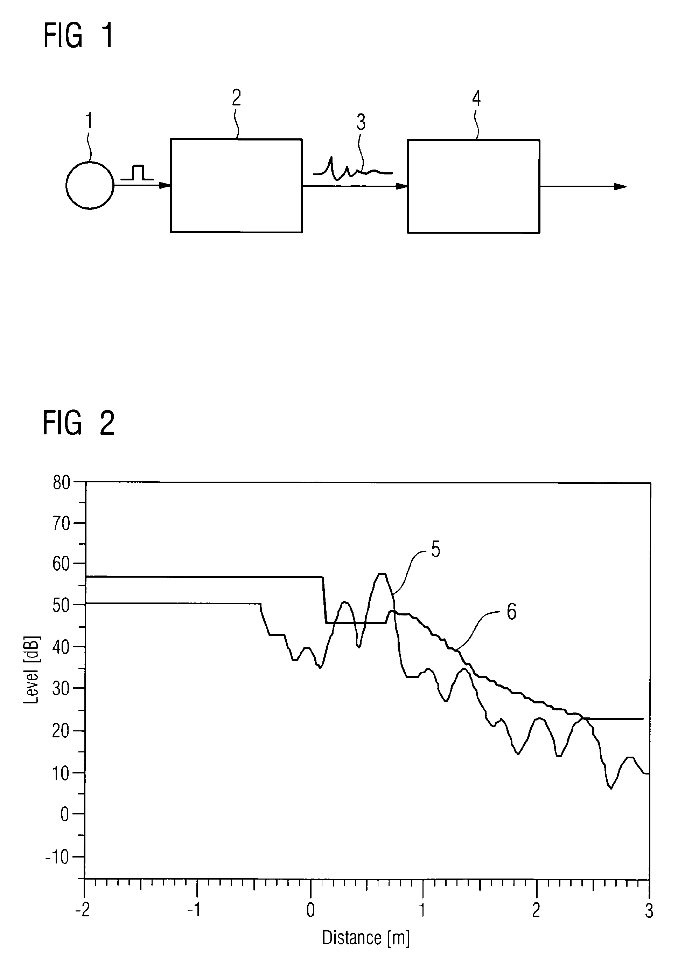

Referring to FIG 1, a radar or ultrasonic transducer 1 transmits an interrogating pulse into a storage vessel 2. A captured echo signal 3 is applied to a signal processing circuit 4 in which the echo signal is digitised and processed as will now be described.

The default algorithm for many level measurement devices is based on the center of mass of the tip of the selected echo. The hypothesis behind this design is that the peak is symmetric and well defined in most applications. In real applications, there are often multiple sources of reflections which will result in multiple peaks on the echo profile, as seen in Figure 2. In FIG 2 and subsequent Figures, the echo profile is shown at 5; the trace 6 is a time varying threshold which is not relevant to the present description. When the physical distance between the sources of interference is larger than the width of the echoes, the peaks are distinct and they do not interfere with each other, which in turn provides clean echoes and very good accuracy.

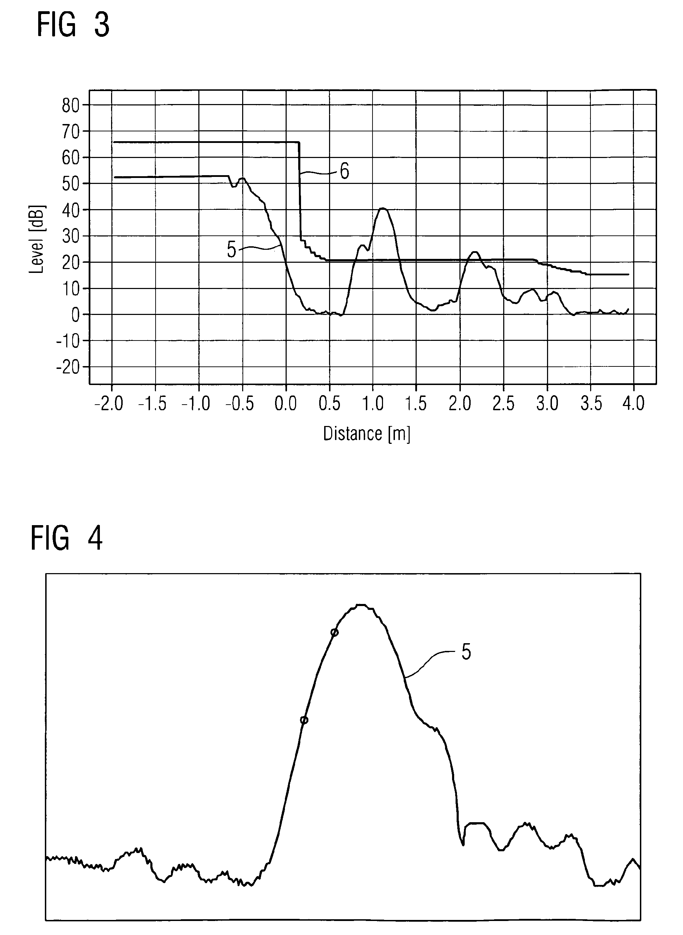

There are however many scenarios where the echoes from two or more obstacles will have a very similar time-of-flight. In those circumstances, as shown in Figure 3, the echoes merge. When this happens, the shape of the peak of the selected echo will vary and the two echoes interfere with each other. Depending on the phase (which will change from profile to profile), the depth of the valley between the two echoes will vary from deep to very shallow. This also affects the tip of the echo, which will vary from the expected shape, resulting in inaccurate measurements.

The effect of interference on the tip of the echo is illustrated in the following Figures.

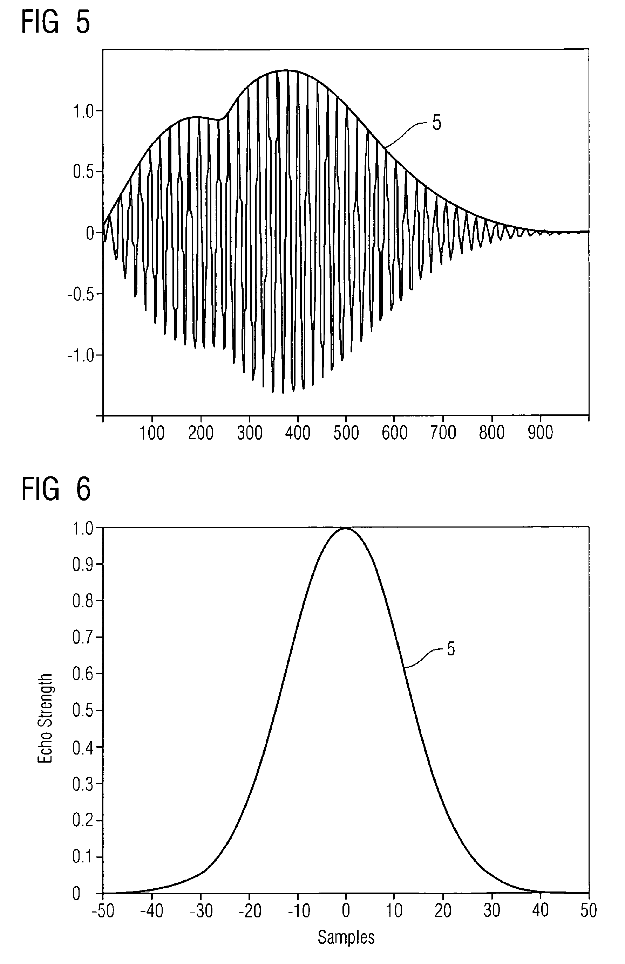

In FIG 4, a secondary, weaker echo to the right influences the right hand side of the main echo, shifting the calculated position to the right. In FIG 5, a secondary, weaker echo to the left influences the left hand side of the main echo, shifting the calculated position to the left, or to the right, depending of the depth of the valley. A deep valley would result in a shift of the calculated position to the right. A shallow valley would results in a shirt of the calculated position to the left.

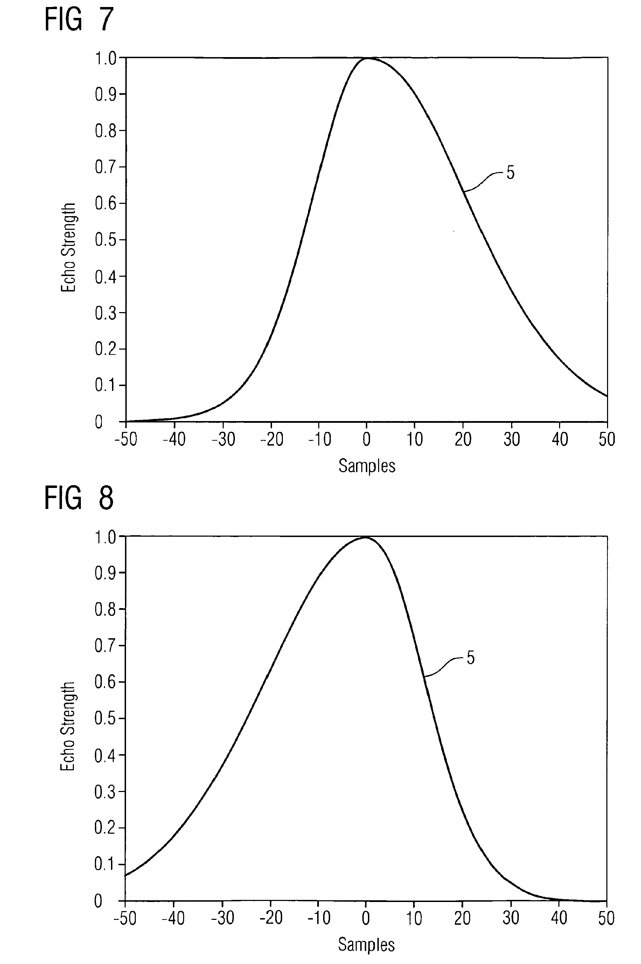

There are also applications where the secondary echo is not directly visible, but its presence can be detected by measuring the distortion in the shape of the echo. FIG 6 shows a perfect, symmetric echo. In FIG 7, the device will report an error to the right-hand side of the true position because the right-hand side of the profile is higher than expected, due to the presence of a close and weaker multipath. FIG 8 shows a similar distortion in the opposite direction.

The present invention makes use of these factors to allow correction for errors in the near range without the need for calibration. The invention is based on comparing the shape of a received pulse with an averaged or expected shape.

The expected shape is typically a reversed parabolic tip with good symmetry. The expected shape for a given device could be measured and saved by averaging over e.g. 32 clean profiles. However, the radar design is very robust and the echo shape does not change significantly from device to device. Accordingly, an expected shape can be determined for a particular design of device and used as a standard for all devices of that design.

It will be appreciated that the method of the invention will normally be executed by an algorithm within the signal processing system, although implementation in hardware is also possible in principle. Suitable forms of algorithm will be apparent to those skilled in the art and can be derived by routine experimentation. The following characteristics of the echo are those most likely to be useful in the evaluation:
1. Pulse width
2. Actual signal strength
3. Pulse symmetry
4. Depth of the nulls on each side of the main lobe
5. Level of the first side lobes
6. Skewness
7. Kurtosis.

A useful evaluation may be made using fewer than all of these. In general terms, two or more may be selected.

It is of course necessary to identify those parts of the echo profile which constitute echo pulses, but techniques for doing so are well known in the art and will not be described here.

## Claims

1. A method of processing echo profiles in a pulse-echo measurement system, the method comprising identifying individual echo pulses in the echo profile; assessing the shape of each pulse by determining the deviation of the shape from an expected shape; and deriving an error correction factor from the assessment of the shape alone, without other calibration.

2. The method of claim 1, in which the expected shape is derived by averaging a number of actual measurements.

3. The method of claim 2, in which the averaged measurements from one apparatus is used to define the expected shape in other apparatus of the same design.

4. The method of any preceding claim, in which the deviation of the pulse shape from an expected shape is determined by evaluating two or more of the following:
pulse width
actual signal strength
pulse symmetry
depth of the nulls on each side of the main lobe
level of the first side lobes
skewness
kurtosis.

5. Computer program with a computer readable program code for implementing the method according to any one of claims 1 to 4 when the program code is run on a computer.

6. Computer program product, such as a storage medium, with a computer readable program code for implementing the method according to any one of claims 1 to 4 when the program code is run on a computer.

7. A pulse-echo measurement system comprising a transmitter for transmitting pulses of energy (1), a transducer for receiving reflected pulses and forming an echo profile (3), and signal processing means (4); in which the signal processing means is operable to identify individual echo pulses in the echo profile; assess the shape of each pulse by determining the deviation of the shape from an expected shape; and derive an error correction factor from the assessment of the shape alone, without other calibration.

8. A system according to claim 7, being a radar-based system.

9. A system according to claim 7 or claim 8, being a level measurement system.

10. The pulse-echo measurement system of claim 9, wherein the signal processing means (4) comprises computer program storage means comprising the computer program of claim 5.
